# EUROPEAN PATENT SPECIFICATION

(11) **EP 3 670 895 B1**
(45) Date of publication and mention of the grant of the patent: **18.10.2023**
(21) Application number: 18214317.2
(22) Date of filing: 20.12.2018
(51) Int. Cl.: F02M 55/02, F02M 61/16

(54) **FUEL RAIL ASSEMBLY FOR A FUEL INJECTION SYSTEM FOR AN INTERNAL COMBUSTION ENGINE**
KRAFTSTOFFSCHIENENANORDNUNG FÜR EIN KRAFTSTOFFEINSPRITZSYSTEM FÜR EINEN VERBRENNUNGSMOTOR
ENSEMBLE DE RAMPE DE CARBURANT POUR UN SYSTÈME D'INJECTION DE CARBURANT D'UN MOTEUR À COMBUSTION INTERNE

(43) Date of publication of application: 24.06.2020
(73) Proprietor: Vitesco Technologies GmbH, 93055 Regensburg (DE)
(72) Inventor: Serra, Giandomenico, 56010 Ghezzano - S.Giuliano Terme (PI) (IT); Di Domizio, Gisella, 56017 San Giuliano Terme (IT); Giorgetti, Edoardo, 57016 Rosignano Marittimo (LI) (IT)
(74) Representative: Vitesco Technologies

(56) References cited:
- EP-A1- 3 196 457
- EP-A1- 3 232 046
- EP-A2- 2 466 112
- DE-A1-102016 210 391
- DE-A1-102017 205 691
- GB-A- 2 537 642
- JP-A- 2013 072 430
- US-B2- 6 705 292

## Description

Fuel rail assembly for a fuel injection system for an internal combustion engine

The present disclosure relates to a fuel rail assembly for a fuel injection system for an internal combustion engine and particularly to a fuel rail assembly for incorporation in a fuel injection system for a multicylinder direct injection internal combustion engine.

In some arrangements, the fuel rail comprises an elongate reservoir for fuel in which the fuel is supplied to a fuel inlet by a high-pressure fuel pump and the fuel rail has spaced along its length fuel outlets for supplying fuel to a fuel injector for injecting fuel directly into each cylinder of the engine. The volume of fuel in the fuel rail is intended to damp out fluctuations in the pressure of the fuel supplied by the pump so that the pressure at each outlet is equal and substantially constant. EP 3 196 457 A1 relates to a fuel rail assembly for a fuel injection system for an internal combustion engine.

The fuel rail is typically a substantial generally tubular element which has to be strong enough to cope with the stresses of the load applied to the fuel rail by the high pressure of fuel in the reservoir and also to cope with the additional operating stresses caused by the harsh environment in a vehicle caused by vibration of the engine and the high temperatures and pressures to which the fuel rail is subjected. The volume of the fuel rail is typically selected to be large enough to damp out pressure fluctuations in the fuel entering the fuel rail before the fuel enters the fuel outlet or outlets. As a result, the fuel rail tends to be heavy and costly to construct because of the amount of material used in its construction and there are some limitations to the freedom of positioning the fuel rail assembly and the engine in the vehicle.

The present disclosure seeks to provide a fuel rail which reliably provides fuel with reduced pressure fluctuations.

According to the present disclosure there is provided a fuel rail assembly for a fuel injection system for an internal combustion engine, the fuel rail assembly comprising a fuel rail comprising an elongate generally tubular body forming a fuel reservoir and having formed integrally therewith one or more fuel outlet ports. Each outlet port incorporates integrally therewith a fuel injector cup adapted to receive a fuel injector and comprises a fuel outlet passage providing a fluid communication from the fuel rail to the injector cup. The fuel outlet passage has a non-uniform cross-section. The non-uniform cross-section of the fuel outlet passage enables the pressure of the fuel and pressure fluctuations in the fuel to be influenced at a position just upstream of the injector cup. Additionally, the fuel outlet passage and the non-uniform cross-section may be adjusted and optimised for each outlet port and injector cup.

In some embodiments, the fuel outlet passage is an elongate passage having a non-uniform cross-section along its length.

The fuel outlet passage comprises at least one constricting section with a reduced cross-section. The constricting section may provide an orifice that has a diameter of 1.5 mm or less. The constricting section is arranged at a junction between the fuel rail and the outlet passage and/or at a junction between the outlet passage and the injector cup and/or along the length of the fuel outlet passage at a position intermediate and spaced apart from both the junction of the fuel rail and the outlet passage and the junction of the outlet passage and the injector cup.

This non-uniform cross-sectional area of the outlet passage arrangement allows the flow of fuel through the outlet passage to be modified to reduce or minimise fluctuations in the fuel pressure which may occur in the fuel rail volume itself. By carrying out this refinement of the fuel flow immediately before the injector cup, it is possible for the volume of the fuel rail to be reduced thus reducing the of material cost of the fuel rail as well as its volume which has advantages in packaging the fuel rail assembly in the vehicle.

Fuel rail assemblies manufactured using traditional techniques typically comprise a straight tubular fuel rail element formed of a metal such as stainless steel typically by forging, deep drawing or milling. Further components such as a fuel inlet port, fuel outlet ports and mounting brackets are secured by brazing. Openings have to be drilled in the fuel rail and the inlet or outlet ports are secured over the orifices by brazing by utilising a brazing paste or brazing ring. This can lead to problems in production in which the opening can be blocked by the brazing paste or the brazing ring as it melts. These problems are exacerbated if the opening is small and located at the junction between the fuel rail and the outlet port. According to the present disclosure, the outlet port and injector cup are formed integrally with the fuel rail, for example by additive manufacturing, so that these difficulties are avoided, also for embodiments in which the constricting section or sections or orifices are positioned at the outlet port.

Additionally, in fuel rail assemblies manufactured using traditional techniques, in order to ensure that the fuel pressure at the fuel injectors is constant and the same for each cylinder in a multicylinder vehicle, the length of the passage from the fuel rail to the fuel injector is typically set to be the same and have the same design characteristics for each fuel injector. This means that in practice, the position of the fuel rail relative to the engine and the fuel injectors is greatly prescribed.

However, according to the present disclosure, a plurality of outlet ports spaced along the fuel rail are provided, wherein the outlet passage of two or more of the outlet ports differ in shape from one another. Therefore, the fuel pressure and reduction in fuel fluctuation can be adjusted and optimised for each injector so that the pressure which enters each injector is more similar. This also enables any variation in pressure within the fuel rail and the pressure fluctuations that are dependent on the position in the fuel rail, for example the distance from the inlet port, to be compensated.

The fuel outlet passage comprises a plurality of channels along at least part of its length. The plurality of channels may be located at the junction of the fuel rail and the fuel outlet passage to form a plurality of entry channels into the outlet passage which merge into a single channel. In another embodiment, the plurality of channels may be located at the junction of the outlet passage and the injector cup to form a plurality of exit channels into the injector cup. A plurality of channels may also be arranged in the fuel outlet passage at a position between the junction of the fuel rail and the fuel outlet passage and the junction of the outlet passage and the injector cup so that a single inlet is divided into a plurality of channels which merge into a single outlet.

In some embodiments, the fuel rail assembly may further comprise a plurality of mounting brackets formed integrally therewith by which the fuel rail is securable to an engine. The inlet port may also be formed integrally with the fuel rail.

In an embodiment, the fuel rail may have a non-uniform wall thickness, being increased in areas of high stress. In this case, the wall thickness is preferably increased in the region of the fuel inlet and in the regions of the outlet ports and the mounting brackets. This arrangement enables the overall wall thickness of the fuel rail to be reduced with a consequent saving in material cost and weight.

In an embodiment, the fuel rail may have a non-uniform cross-section along its length which can facilitate the smoothing out of pressure fluctuations in the fuel rail. Thus, the flexibility afforded by the present disclosure enables the size and shape of the fuel rail to be varied throughout its length and its general shape whilst still ensuring that the fluctuations in the fuel pressure are effectively equalised at the point of fuel injection by appropriate design of the outlet passage between the fuel rail and the injector cup.

In an example, the fuel rail assembly is formed by an additive manufacturing technology. The fuel rail may be formed of a synthetic plastics material or a metal such as stainless steel or other alloy.

The fuel rail according to any of the embodiments described herein may be formed by an additive manufacturing technology. Additive manufacturing techniques may be used to build up the fuel rail layer by layer. For example, the elongate body and additional functional elements, such as the fuel inlet, fuel outlet(s) and mounting bracket(s) may be built up layer by layer using 3D (Three-dimensional) printing or Powder Bed Fusion or Directed Energy Deposition. The fuel rail may be built up layer by layer by movement of the metal jet print head, laser or electron beam controlled according to a three dimensional model of the fuel rail.

A fuel rail assembly will now be described with reference to the accompanying drawings, in which:-
- Figure 1: shows a schematic view of a fuel rail assembly formed by means of additive manufacturing technology,
- Figure 2A: shows a front view of the fuel rail of figure 1.
- Figure 2B: shows a cross-sectional view of the fuel rail of figure 1 and an outlet passage leading to an injector cup.
- Figure 3: shows a cross-sectional view of the fuel rail and of the outlet passage, and
- Figure 4: shows a cross-sectional view of the fuel rail and a further outlet passage.

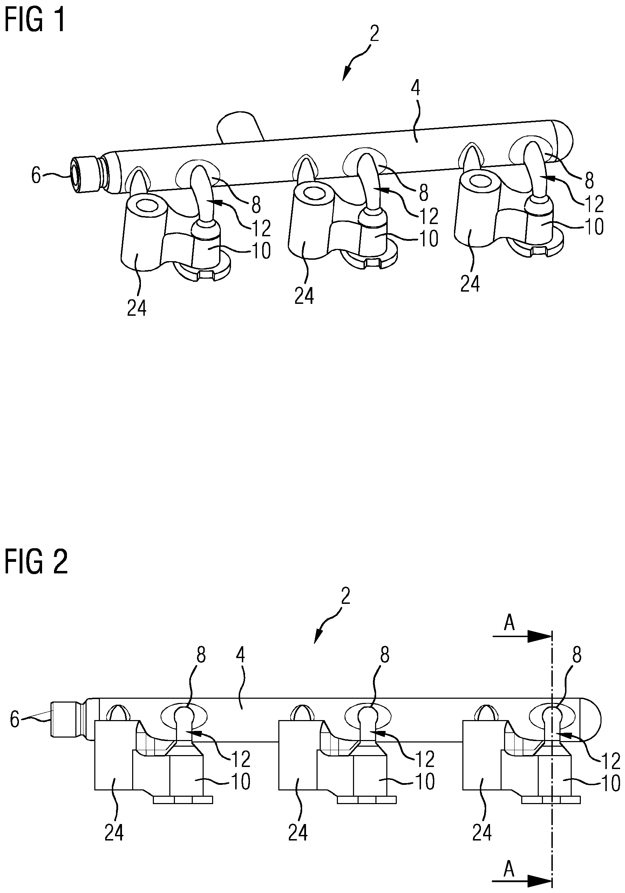

Referring now to Figure 1 there is shown a fuel rail assembly 2, which consists of an elongated generally tubular fuel rail 4 which has a fuel inlet 6 at one end. At the other end the fuel rail 4 is closed by a blanking plug. Spaced along the fuel rail 4 are a plurality of outlet ports 8 each including an injector cup 10 adapted to receive a fuel injector (not shown). Each injector cup 10 is connected to the fuel rail 4 and an outlet port 8 through a fuel outlet passage 12 which provides a fluid connection between the fuel rail 4 and the injector cup 10.

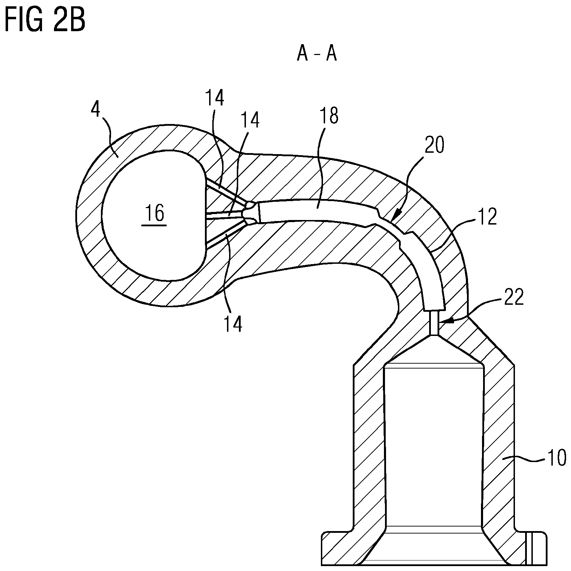

Figure 2A shows a front view of the fuel rail 4 of figure 1 and figure 2B shows a cross-sectional view of the fuel rail 4 of figures 1 and of an outlet passage 12 leading to an injector cup 10. As can be seen in figure 2, the outlet passage 12 has a non-uniform cross-section. The non-uniform cross-section may be provided by one or more sections or lengths of the outlet passage 12 having a narrower or reduced cross-sectional area compared to the adjoining portions. The section or lengths of the outlet passage 12 having a narrower or reduced cross-sectional area provide a constricting section. The constricting section may be described as an orifice which may have a diameter of 1.5 mm or less.

In figure 2, the outlet passage 12 has three inlet entry channels 14 which provide a fluid communication from the interior volume 16 of the fuel rail 4 to a common channel 18 of the outlet passage 12. The cross-sectional area of the fuel outlet passage 12 varies along its length to serve as further means to damp out oscillations in the fuel supplied from the fuel rail 2 to the fuel injector. In the embodiment shown in figure 2, the outlet passage 12 further comprises a first narrowed section 20 of reduced cross sectional area towards the centre of its length and a further narrowed section 22 leading into the interior of the fuel injector cup 10.

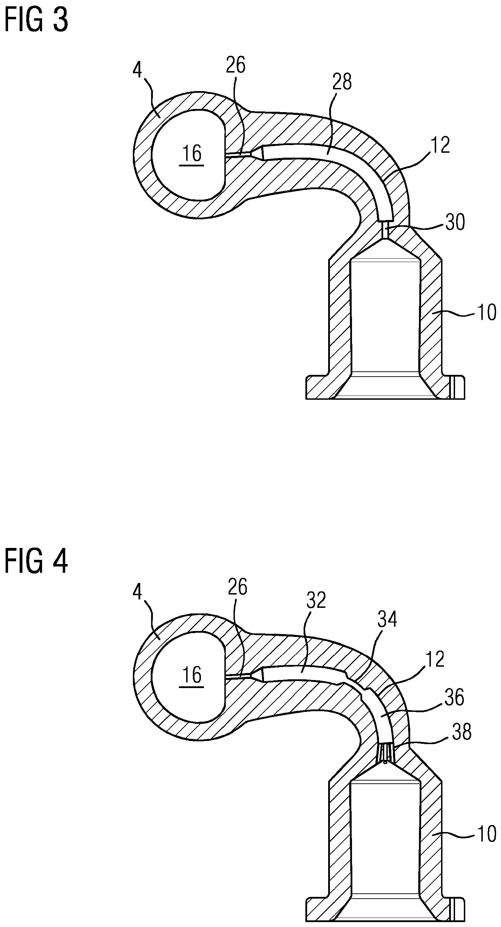

Further examples of the fuel outlet passage 12 are illustrated in Figures 3 and 4.

As shown in Figure 3, the fuel outlet passage 12 has an initial inlet section 26 of relatively narrow cross-section leading from the interior volume 16 of the fuel rail 4 into a main channel section 28 of larger cross-sectional area. At its outlet end the passage 12 has an outlet channel section 30 of reduced cross sectional area leading into the injector cup 10. The precise length and cross-sectional area of the channel sections 26, 28 and 30 are determined by the degree of smoothing required in the outlet passage 12 to provide fuel with the required outlet flow and pressure into the injector cup 10 and, in particular with the required outlet flow and pressure into that particular injector cup 10.

Figure 4 discloses an alternative example having an initial inlet section 26 of relatively narrow cross-section leading from the interior volume 16 of the fuel rail into a first channel section 32 of increased cross-sectional area. Downstream of the outlet of the first channel section 32, the outlet passage 12 has an intermediate channel section 34 of reduced cross section. The intermediate section 34 leads to a further channel section 36 of larger cross-sectional area which leads to an outlet end section 38 leading to the injector cup 10. In this example the outlet section end section 38 consists of a plurality of small channels arranged in parallel. The number of the small channels, their diameter and their length may be selected depending on the characteristics required for the fuel flow and pressure into the injector cup 10. The shape of the various cross-sectional areas of the outlet passage 12 can be varied to suit the particular characteristics required for each outlet passage 12.

Thus, fluctuations in the pressure in the fuel supply outlet passage 12 can be smoothed out immediately before or upstream of the fuel injector cup 10 and downstream of the fuel rail 4. This has the further advantage that the individual fuel outlet passages can vary in size, shape and length to ensure that a constant uniform pressure is supplied from the fuel rail to each injector cup, since the final adjustment of the outlet flow, fuel pressure and smoothing of the fuel pressure can be determined locally by the from of the particular fuel outlet passage as it enters the injector cup and just upstream of the injector. This has the further advantage that the position of the fuel rail relative to the engine can vary to suit a particular installation. It is also readily possible for the size and shape of the individual orifices to be varied by fabricating the fuel fail with its integrated outlet port, injector cup and outlet passageway using additive manufacturing technology.

Consequently, it is no longer necessary for the fluctuations in the fuel pressure to be entirely eliminated by reservoir 16 of the fuel rail 4 itself, normally achieved by having a relatively large volume in the fuel rail. The damping or smoothing of the pressure fluctuations downstream of the reservoir 16 of the fuel rail 4 in the outlet passage 12 may enable the volume in the fuel rail 4 to be reduced, which enables the overall size of the fuel rail to be reduced which aids packaging in the vehicle and also reduces the weight and material cost of the fuel rail.

The fuel rail 4 also includes mounting brackets 24 by which the fuel rail can be secured to the engine. The mounting brackets 24 may be formed integrally with the fuel rail 4.

The fuel rail 4, the inlet and outlet ports 6 and 8 respectively, the outlet passage 12 and the injector cup 10 may be formed integrally as a single component by means of an additive manufacturing technology.

In this example, the elements of the single component are formed of the same material, which may be a metal such as stainless steel or a synthetic plastics material, but it is envisaged that the additive manufacturing technology may use alternative material for certain parts of the fuel rail assembly.

The wall thickness of the fuel rail 4 may varied along its length in dependence upon the stress levels at particular parts and can be increased in a smooth manner to reduce or eliminate the stress concentration points which inevitably occur in the regions of the openings for the ports, for example in the region between the fuel rail 4 and the outlet ports 8.

In this way, the material used in the formation of the fuel rail is minimised since the wall thickness in the low stress areas can be kept relatively thin, the wall thickness only being increased in higher stress regions with the result that the overall stress levels throughout the fuel rail can be kept relatively constant. This has the advantage that the fuel rail can be manufactured with less material and hence lower weight and cost.

To summarise, a non-uniform cross-section of the outlet passage is provided which may be achieved by one or more lengths or zones of the outlet passage having a reduced internal cross-section. These lengths with a reduced internal cross-sectional area, which may also be defined as an orifice, and/or the use of multiple narrower sections to divide the fuel flow between the passages enables a reduction of the pressure peaks in the fuel pressure. This leads to a better functionality of the injector and lower mechanical stress on the fuel rail due to pressure pulsations. The one or more internal orifices are integrated in the connector that extends between the opening providing the outlet from the fuel rail and the injector cup. The connector includes the outlet passage with its one or more zones having a reduced internal cross-sectional area compared to adjoining zones.

A different layout may be used for the one or more internal orifices for each injector connection depending on the application requirements and the volume distribution. In addition, a different number of orifices for different cylinder positions may be used. This may be useful as the distance from the inlet port is different from for each cylinder. The design or form of the orifices and their position can also be different depending on the application, In addition, the number of orifices in the design can be different for different applications and also for a particular injector.

The use of additive manufacturing allows the production of orifice shapes and lengths which are difficult or expensive to form using traditional technologies. Due to the greater freedom in the distribution of the material and, as a consequence of the reduction of the pressure peaks, a better stress distribution can be provided. Alternatively, the peak stress may be substantially the same but the amount of material used to fabricate the fuel rail may be reduced. This can be used to reduce the weight of the fuel rail.

The shape of the orifices and the internal volume of the outlet passage can be varied depending on the application. The thickness which is a result of the internal and external profile, in other words, the wall thickness, is also variable and can also be optimised depending on the application by increasing the wall thickness in regions subjected to higher stress and decreasing the wall thickness in regions subjected to less stress as a result of the reduction in the pressure pulsation peaks. The overall dimensions and weight of the fuel rail may also be reduced as a result of these improvements and, in particular, a reduction in the peak pressure.

### References

- 2: Fuel rail assembly.
- 4: Fuel rail
- 6: Fuel inlet
- 8: Fuel outlet port
- 10: Injector cup
- 12: Outlet passage
- 14: Entry channels
- 16: Fuel rail volume
- 18: Common channel
- 20: First section
- 22: Second section
- 24: Mounting brackets
- 26: Inlet section
- 28: Main channel section
- 30: Outlet channel section
- 32: First channel section
- 34: Intermediate channel section
- 36: Further channel section
- 38: Outlet channel section.

## Claims

1. A fuel rail assembly for a fuel injection system for an internal combustion engine, the fuel rail assembly comprising a fuel rail (4) comprising an elongate generally tubular body forming a fuel reservoir and having formed integrally therewith one or more fuel outlet ports (8), wherein each outlet port (8) incorporates integrally therewith a fuel injector cup (10) adapted to receive a fuel injector and comprises a fuel outlet passage (12) providing a fluid communication from the fuel rail (4) to the injector cup (10), wherein the fuel outlet passage (12) has a non-uniform cross-section, **characterized in that** the fuel outlet passage (12) comprises a plurality of channels (14) along at least part of its length and **in that** the fuel outlet passage (8) comprises at least one constricting section with a narrower cross-section, wherein the constricting section is arranged at a junction between the fuel rail (4) and the outlet passage (8) and/or at a junction between the outlet passage (8) and the injector cup (10), wherein a plurality of outlet ports (8) spaced along the fuel rail are provided, wherein two or more of the outlet ports (8) comprise an outlet passage (12) that differs in shape.

2. A fuel rail assembly for a fuel injection system for an internal combustion engine according to claim 1, wherein the fuel outlet passage (12) is an elongate passage having a non-uniform cross-section along its length.

3. A fuel rail assembly for a fuel injection system for an internal combustion engine according to claim 2, wherein the plurality of channels (14) are located at the junction of the outlet passage (12) and the injector cup (10) and/or at the junction between the fuel rail (4) and the fuel outlet passage (12) to form a plurality of entry channels into the outlet passage (12) which merge into a common channel (18).

4. A fuel rail assembly for a fuel injection system for an internal combustion engine according to any one of claims 1 to 3, further comprising a fuel inlet port (6) formed integrally therewith.

5. A fuel rail assembly for a fuel injection system for an internal combustion engine according to any one of claims 1 to 4, further comprising a plurality of mounting brackets (24) formed integrally therewith by which the fuel rail (4) is securable to an engine.

6. A fuel rail assembly for a fuel injection system for an internal combustion engine according to any one of the preceding claims, wherein the tubular body of the fuel rail (4) has a non-uniform wall thickness, being increased in high stress regions.

7. A fuel rail assembly for a fuel injection system for an internal combustion engine according to claim 6, wherein the wall thickness is increased in the region of the fuel inlet (6) and/or in the regions of the outlet port (8) and/or the mounting brackets (24).

8. A fuel rail assembly for a fuel injection system for an internal combustion engine according to any one of the preceding claims, wherein the fuel rail (4) has a non-uniform cross-section along its length.

9. A fuel rail assembly for a fuel injection system for an internal combustion engine according to any one of the preceding claims, wherein the fuel rail (4) is formed of a metal.

10. A fuel rail assembly for a fuel injection system for an internal combustion engine according to any one of claims 1 to 8, wherein the fuel rail (4) is formed of stainless steel.

## Patentansprüche

1. Kraftstoffverteileranordnung für ein Kraftstoffeinspritzsystem für eine Brennkraftmaschine, wobei die Kraftstoffverteileranordnung einen Kraftstoffverteiler (4) umfasst, der einen länglichen, im Allgemeinen rohrförmigen Körper umfasst, der ein Kraftstoffreservoir ausbildet und eine oder mehrere integral damit ausgebildete Kraftstoffauslassöffnungen (8) aufweist,
wobei jede Auslassöffnung (8) integral damit eine Kraftstoffeinspritzventilaufnahme (10) aufweist, die dazu geeignet ist, ein Kraftstoffeinspritzventil aufzunehmen, und einen Kraftstoffauslassdurchgang (12) umfasst, der eine Fluidverbindung von dem Kraftstoffverteiler (4) zu der Einspritzventilaufnahme (10) bereitstellt, wobei der Kraftstoffauslassdurchgang (12) einen nicht einheitlichen Querschnitt aufweist, **dadurch gekennzeichnet, dass**
der Kraftstoffauslassdurchgang (12) eine Mehrzahl von Kanälen (14) entlang zumindest eines Teils seiner Länge umfasst, und dadurch, dass der Kraftstoffauslassdurchgang (8) mindestens einen Verengungsabschnitt mit einem schmaleren Querschnitt umfasst, wobei der Verengungsabschnitt an einer Anschlussstelle zwischen dem Kraftstoffverteiler (4) und dem Auslassdurchgang (8) und/oder an einer Anschlussstelle zwischen dem Auslassdurchgang (8) und der Einspritzventilaufnahme (10) angeordnet ist, wobei eine Mehrzahl von entlang des Kraftstoffverteilers beabstandeten Auslassöffnungen (8) bereitgestellt sind, wobei zwei oder mehrere der Auslassöffnungen (8) einen Auslassdurchgang (12) umfassen, der sich in der Form unterscheidet.

2. Kraftstoffverteileranordnung für ein Kraftstoffeinspritzsystem für eine Brennkraftmaschine nach Anspruch 1, wobei der Kraftstoffauslassdurchgang (12) ein länglicher Durchgang ist, der einen nicht einheitlichen Querschnitt entlang seiner Länge aufweist.

3. Kraftstoffverteileranordnung für ein Kraftstoffeinspritzsystem für eine Brennkraftmaschine nach Anspruch 2, wobei sich die Mehrzahl von Kanälen (14) an der Anschlussstelle des Auslassdurchgangs (12) und der Einspritzventilaufnahme (10) und/oder an der Anschlussstelle zwischen dem Kraftstoffverteiler (4) und dem Kraftstoffauslassdurchgang (12) befinden, um eine Mehrzahl von Eintrittskanälen in den Auslassdurchgang (12) auszubilden, die in einen gemeinsamen Kanal (18) zusammenlaufen.

4. Kraftstoffverteileranordnung für ein Kraftstoffeinspritzsystem für eine Brennkraftmaschine nach einem der Ansprüche 1 bis 3, ferner umfassend eine integral damit ausgebildete Kraftstoffeinlassöffnung (6) .

5. Kraftstoffverteileranordnung für ein Kraftstoffeinspritzsystem für eine Brennkraftmaschine nach einem der Ansprüche 1 bis 4, ferner umfassend eine Mehrzahl von integral damit ausgebildeten Montagehalterungen (24), durch die der Kraftstoffverteiler (4) an einer Kraftmaschine befestigbar ist.

6. Kraftstoffverteileranordnung für ein Kraftstoffeinspritzsystem für eine Brennkraftmaschine nach einem der vorhergehenden Ansprüche, wobei der rohrförmige Körper des Kraftstoffverteilers (4) eine nicht einheitliche Wandstärke aufweist, die in Bereichen mit hoher Belastung erhöht ist.

7. Kraftstoffverteileranordnung für ein Kraftstoffeinspritzsystem für eine Brennkraftmaschine nach Anspruch 6, wobei die Wandstärke im Bereich des Kraftstoffeinlasses (6) und/oder in den Bereichen der Auslassöffnung (8) und/oder der Montagehalterungen (24) erhöht ist.

8. Kraftstoffverteileranordnung für ein Kraftstoffeinspritzsystem für eine Brennkraftmaschine nach einem der vorhergehenden Ansprüche, wobei der Kraftstoffverteiler (4) einen nicht einheitlichen Querschnitt entlang seiner Länge aufweist.

9. Kraftstoffverteileranordnung für ein Kraftstoffeinspritzsystem für eine Brennkraftmaschine nach einem der vorhergehenden Ansprüche, wobei der Kraftstoffverteiler (4) aus einem Metall ausgebildet ist.

10. Kraftstoffverteileranordnung für ein Kraftstoffeinspritzsystem für eine Brennkraftmaschine nach einem der Ansprüche 1 bis 8, wobei der Kraftstoffverteiler (4) aus rostfreiem Stahl ausgebildet ist.

## Revendications

1. Ensemble à rampe de carburant pour un système d'injection de carburant pour un moteur à combustion interne, l'ensemble à rampe de carburant comprenant une rampe de carburant (4) comprenant un corps tubulaire généralement allongé formant un réservoir de carburant et ayant, formés de façon monobloc avec celui-ci, un ou plusieurs orifices de sortie de carburant (8),
dans lequel chaque orifice de sortie (8) incorpore, de façon monobloc avec celui-ci, une coupelle d'injecteur de carburant (10) adaptée pour recevoir un injecteur de carburant, et comprend un passage de sortie de carburant (12) fournissant une communication fluidique depuis la rampe de carburant (4) à la coupelle d'injecteur (10), dans lequel le passage de sortie de carburant (12) a une section transversale non uniforme, **caractérisé en ce que**
le passage de sortie de carburant (12) comprend une pluralité de canaux (14) le long d'au moins une partie de sa longueur et **en ce que** le passage de sortie de carburant (8) comprend au moins une section de rétrécissement avec une section transversale plus étroite, dans lequel la section de rétrécissement est agencée à une jonction entre la rampe de carburant (4) et le passage de sortie (8) et/ou à une jonction entre le passage de sortie (8) et la coupelle d'injecteur (10), dans lequel une pluralité d'orifices de sortie (8) espacés le long de la rampe de carburant sont prévus, dans lequel deux, ou plus, des orifices de sortie (8) comprennent un passage de sortie (12) qui diffère en forme.

2. Ensemble à rampe de carburant pour un système d'injection de carburant pour un moteur à combustion interne selon la revendication 1, dans lequel le passage de sortie de carburant (12) est un passage allongé ayant une section transversale non uniforme le long de sa longueur.

3. Ensemble à rampe de carburant pour un système d'injection de carburant pour un moteur à combustion interne selon la revendication 2, dans lequel la pluralité de canaux (14) sont situés à la jonction du passage de sortie (12) et de la coupelle d'injecteur (10) et/ou à la jonction entre la rampe de carburant (4) et le passage de sortie de carburant (12) pour former une pluralité de canaux d'entrée dans le passage de sortie (12) qui se fusionnent en un canal commun (18).

4. Ensemble à rampe de carburant pour un système d'injection de carburant pour un moteur à combustion interne selon l'une quelconque des revendications 1 à 3, comprenant en outre un orifice d'entrée de carburant (6) formé de façon monobloc avec celui-ci.

5. Ensemble à rampe de carburant pour un système d'injection de carburant pour un moteur à combustion interne selon l'une quelconque des revendications 1 à 4, comprenant en outre une pluralité de supports de montage (24) formés de façon monobloc avec celui-ci par lesquels la rampe de carburant (4) est fixable à un moteur.

6. Ensemble à rampe de carburant pour un système d'injection de carburant pour un moteur à combustion interne selon l'une quelconque des revendications précédentes, dans lequel le corps tubulaire de la rampe de carburant (4) a une épaisseur de paroi non uniforme, étant augmentée dans des régions de haute contrainte.

7. Ensemble à rampe de carburant pour un système d'injection de carburant pour un moteur à combustion interne selon la revendication 6, dans lequel l'épaisseur paroi est augmentée dans la région de l'entrée de carburant (6) et/ou dans les régions de l'orifice de sortie (8) et/ou des supports de montage (24).

8. Ensemble à rampe de carburant pour un système d'injection de carburant pour un moteur à combustion interne selon l'une quelconque des revendications précédentes, dans lequel la rampe de carburant (4) a une section transversale non uniforme le long de sa longueur.

9. Ensemble à rampe de carburant pour un système d'injection de carburant pour un moteur à combustion interne selon l'une quelconque des revendications précédentes, dans lequel la rampe de carburant (4) est formée d'un métal.

10. Ensemble à rampe de carburant pour un système d'injection de carburant pour un moteur à combustion interne selon l'une quelconque des revendications 1 à 8, dans lequel la rampe de carburant (4) est formée d'acier inoxydable.
